(19) Europäisches Patentamt
European Patent Office
Office européen des brevets

(11) Veröffentlichungsnummer: **0 217 108**
**B1**

(12) # EUROPÄISCHE PATENTSCHRIFT

(45) Veröffentlichungstag der Patentschrift: **02.08.89**

(51) Int. Cl.⁴: **A01N 47/04**, B27K 3/40, C09D 5/14, C07C 145/02

(21) Anmeldenummer: **86111619.2**

(22) Anmeldetag: **22.08.86**

(54) **Materialschutzmittel.**

(30) Priorität: **03.09.85 DE 3531363**

(43) Veröffentlichungstag der Anmeldung:
**08.04.87 Patentblatt 87/15**

(45) Bekanntmachung des Hinweises auf die Patenterteilung:
**02.08.89 Patentblatt 89/31**

(84) Benannte Vertragsstaaten:
**BE CH DE FR GB IT LI NL SE**

(56) Entgegenhaltungen:
**EP-A- 0 022 900**
**EP-A- 0 027 622**
**EP-A- 0 075 172**
**CH-B- 654**
**DE-B- 1 193 498**
**DE-B- 1 238 139**
**GB-A- 716 553**

**ANGEW. CHEM., Band 76, Nr. 19, 28. September 1964, Seiten 807-816, Weinheim, DE; E. KÜHLE et al.: "Fluordichlormethylthio-Verbindungen und ihre Verwendung im Pflanzenschutz"**

(73) Patentinhaber: **BAYER AG, D-5090 Leverkusen 1 Bayerwerk(DE)**

(72) Erfinder: **Kühle, Engelbert, Dr., Von Bodelschwingh-Strasse 42, D-5060 Bergisch-Gladbach 2(DE)**
Erfinder: **Paulus, Wilfried, Dr., Deswatinesstrasse 90, D-4150 Krefeld(DE)**
Erfinder: **Fischler, Michael, Dr., Buschstrasse 112, D-4150 Krefeld(DE)**
Erfinder: **Schmitt, Hans-Georg, Dr., Am Oberend 13, D-4150 Krefeld(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Die Erfindung betrifft ein N-sulfenylierte Benzolsulfonamide enthaltendes Materialschutzmittel.

Aus der DE-AS 12 38 139, aus Angew. Chem. 76, S. 807 (1964) und aus Holz als Roh- und Werkstoff 35, (1977) 233 bis 237 ist die Verwendung von N-Fluordichlormethylthio-Verbindungen im Materialschutz, z.B. als technische Konservierungsstoffe, bekannt. Die aus den genannten Veröffentlichungen bekannten N-Fluordichlormethylthio-Verbindungen, wie das N,N-Dimethyl-N'-phenyl-N'-(fluordichlormethylthio)-sulfamid (Dichlofluanid), das N-Fluordichlormethylthio-phthalimid (Fluorfolpet), das 1,3-(Bisdichlorfluormethylthio)-benzimidazolon und das N,N-Dimethyl-N'-(4-tolyl)-N'-(fluordichlormethylthio)-sulfamid, sind zwar aufgrund ihrer mikrobiziden Wirkung für den Einsatz im Materialschutz geeignet, befriedigen jedoch in ihrer Wirkungweise, z.B. in Holzschutzmitteln nicht immer. So besitzt beispielsweise das obengenannten Dichlofluanid den Nachteil, daß es sich sehr schlecht in den für Holzschutzmittel üblichen Formulierungsmitteln löst, was zur Folge hat, daß große Formulierungsmengen nötig sind, um die erforderliche Wirkstoffmenge auf und/oder in das Holz zu bringen.

In der GB-A 716 553 ist die Herstellung von N-Trichlormethylthio-Verbindungen, u.a. N-Trichlormethylthio-N-butyl-benzolsulfonamid, und deren Verwendung im Pflanzen- und Materialschutz beschrieben.

Aus der DE-AS 1 193 498 ist weiterhin die Verwendung von N-Fluordichlormethylthio-Verbindungen, wie die Verwendung von N-sulfenylierten Benzolsulfonamiden (s. entsprechende Formeln des Beispiels 4), in Pflanzenschutzmitteln mit fungizider Wirkung bekannt.

Gegenstand vorliegender Erfindung ist ein Materialschutzmittel, enthaltend N-sulfenylierte Benzolsulfonamide der Formel

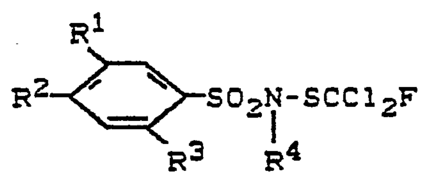

worin

$R^1$, $R^2$ und $R^3$ unabhängig voneinander für Wasserstoff, Halogen, Nitro, Alkyl oder Halogenalkyl stehen und

$R^4$ einen gegebenenfalls substituierten gesättigten oder ungesättigten aliphatischen oder cycloaliphatischen Rest bedeutet, wobei die aliphatischen Reste gegebenenfalls durch Heteroatome ein- oder mehrmals unterbrochen sein können.

Ein weiterer Gegenstand der Erfindung ist die Verwendung der N-sulfenylierten Benzolsulfonamide der obengenannten Formel zum Schutz von technischen Materialien.

Von den N-sulfenylierten Benzolsulfonamiden der genannten Formel sind bevorzugt diejenigen, bei denen $R^1$, $R^2$ und $R^3$ unabhängig voneinander für Wasserstoff, Chlor, Brom, Nitro, Alkyl mit 1 bis 4 C-Atomen, Halogenalkyl mit 1 bis 4 C-Atomen und 1 bis 5 Halogenatomen stehen und $R^4$ für Alkyl mit 1 bis 6 C-Atomen, Alkenyl und Alkinyl mit 3 bis 6 C-Atomen steht, wobei diese Reste gegebenenfalls durch Heteroatome wie Sauerstoff oder Schwefel ein- oder mehrfach (bevorzugt einfach) unterbrochen sein können, oder durch Halogen, wie Chlor oder Iod, substituiert sein können, oder für Cycloalkyl mit 3 bis 7 Ring-C-Atomen steht, die gegebenenfalls durch ein oder mehrere (bevorzugt 1 bis 3) Niederalkylreste mit 1 bis 3 C-Atomen substituiert sein können.

Besonders bevorzugt sind N-sulfenylierte Benzolsulfonamide der obengenannten Formel, bei denen $R^1$ und $R^2$ unabhängig voneinander für Wasserstoff, Chlor, Nitro, Methyl und Trifluormethyl stehen, $R^3$ für Wasserstoff steht und $R^4$ für Alkyl mit 1 bis 6 C-Atomen, Alkenyl und Alkinyl mit 3 bis 6 C-Atomen steht, die gegebenenfalls durch Heteroatome, wie Sauerstoff oder Schwefel ab dem zweiten C-Atom ein oder mehrmals (bevorzugt einfach) unterbrochen sein können oder durch Iod substituiert sein können, oder für Cycloalkyl mit 3 bis 7 Ring-C-Atomen steht, die gegebenenfalls durch ein oder mehrere (bevorzugt 1 bis 3) Methylreste substituiert sein können.

Im einzelnen seien folgende N-sulfenylierte Benzolsulfonamide der nachstehenden Formel genannt:

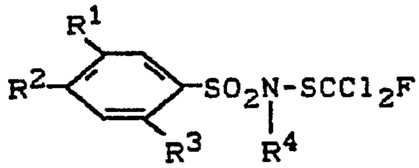

| $R^1$ | $R^2$ | $R^3$ | $R^4$ |
|---|---|---|---|
| H | H | H | $C_2H_5$ |
| H | H | H | $C_3H_7$-iso |
| H | H | H | $C_4H_9$-iso |
| H | H | H | $C_4H_9$-tert. |
| H | H | H | $CH_2C(CH_3)_3$ |
| H | Cl | H | $C_3H_7$ |
| H | Cl | H | $C_3H_7$-iso |
| H | Cl | H | $CH_2CH{=}CH_2$ |
| Cl | H | H | $CH_3$ |
| Cl | H | H | 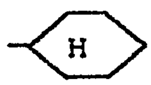 |
| H | $CH_3$ | H | $CH_3$ |
| H | $CH_3$ | H | $C_4H_9$-n |
| H | $CH_3$ | H | 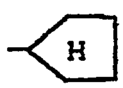 |
| H | $CH_3$ | H | 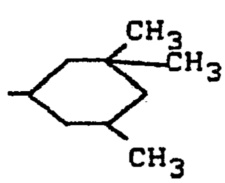 |

| $R^1$ | $R^2$ | $R^3$ | $R^4$ |
|---|---|---|---|
| H | $CF_3$ | H | $CH_3$ |
| H | $CF_3$ | H | $C_2H_5$ |
| $NO_2$ | H | H | $CH_3$ |
| H | $NO_2$ | H | $CH_3$ |
| H | $NO_2$ | H | 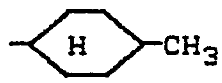 |
| $NO_2$ | H | $CH_3$ | $CH_3$ |
| $NO_2$ | H | $CH_3$ | $CH_2CH=CH_2$ |
| $NO_2$ | H | $CH_3$ | iso-$C_4H_9$ |
| $NO_2$ | H | $CH_3$ | $CH_2CH_2CH_2OCH_3$ |
| H | H | $NO_2$ | $C_2H_5$ |
| H | H | $NO_2$ | 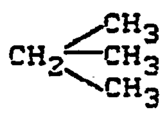 |
| $NO_2$ | H | Cl | $CH_2CH_2SC_2H_5$ |
| $NO_2$ | H | Cl | $C_3H_3$ |
| H | H | $CH_3$ | $CH_3$ |
| H | H | $CH_3$ | n-$C_3H_7$ |
| H | H | $CH_3$ | n-$C_4H_9$ |
| Cl | Cl | H | $CH_3$ |
| Cl | Cl | H | iso-$C_3H_7$ |
| H | H | H | $CH_2C\equiv CJ$ |
| Cl | Cl | H | $CH_2C\equiv CJ$ |

Bevorzugt:

| $R^1$ | $R^2$ | $R^3$ | $R^4$ |
|---|---|---|---|
| H | H | H | $C_2H_5$ |
| $CH_3$ | $CH_3$ | H | $CH_3$ |
| H | $CH_3$ | H | $C_2H_5$ |
| H | $CH_3$ | H | $C_4H_9$ |
| H | Cl | H | $C_4H_9$ |
| $NO_2$ | $CH_3$ | H | $CH_3$ |
| $NO_2$ | $CH_3$ | H | $C_4H_9$ |
| $NO_2$ | H | H | $CH_3$ |
| $NO_2$ | H | H | $C_4H_9$ |
| H | $CH_3$ | H | $C_6H_{11}$ |
| H | $CH_3$ | H | $C_3H_5$ |
| H | $CH_3$ | H | $CH_3$ |
| H | Cl | H | $C_2H_5$ |
| H | $NO_2$ | H | $CH_3$ |

Besonders bevorzugt:

| $R^1$ | $R^2$ | $R^3$ | $R^4$ |
|---|---|---|---|
| H | $CH_3$ | H | $CH_3$ |
| H | $CH_3$ | H | $C_2H_5$ |
| H | Cl | H | $C_2H_5$ |
| $NO_2$ | $CH_3$ | H | $CH_3$ |
| H | $NO_2$ | H | $CH_3$ |
| H | H | H | $C_2H_5$ |
| $CH_3$ | $CH_3$ | H | $CH_3$ |

Technische Materialien im Sinne der Erfindung, die durch die N-sulfenylierten Benzolsulfonamide (Wirkstoffe genannt) der genannten Formel vor einer mikrobiellen Veränderung und Zerstörung geschützt werden können, sind beispielsweise Klebstoffe, Leime, Papiere und Kartone, Textilien, Leder, Holz, Anstrichmittel, Siliconkautschuke und Kunststoffartikel, insbesondere Anstrichmittel und Holz, das für die Verwendung in der Technik zubereitet worden ist.

Mikroorganismen, die einen Abbau oder eine Veränderung der technischen Materialien bewirken können, sind beispielsweise Bakterien, Pilze, Hefen, Algen, Schleime und Viren. Vorzugsweise wirken die erfindungsgemäßen Substanzen gegen Schimmelpilze, holzverfärbende Pilze und holzzerstörende Pilze (Basidiomyceten) sowie gegen Schleimorganismen.

Es seien beispielsweise Mikroorganismen der folgenden Gattungen genannt:
Alternaria, wie Alternaria tenuis,
Aspergillus, wie Aspergillus niger,
Chaetomium, wie Chaetomium globosum,
Coniophora, wie Coniophora puteana,
Lentinus, wie Lentinus tigrinus,
Penicillium, wie Penicillium glaucum,
Polyporus, wie Polyporus versicolor,
Aureobasidium, wie Aureobasidium pullulans,
Sclerophoma, wie Sclerophoma pityophila,
Staphylococcus, wie Staphylococcus aureus.

Je nach dem Anwendungsgebiet können die N-sulfenylierten Benzolsulfonamide der obengenannten Formel in die üblichen Formulierungen übergeführt werden, wie Lösungen, Emulsionen, Suspensionen, Pulver, Pasten, Granulate, Schäume und Aerosole.

Die Anwendungskonzentrationen der erfindungsgemäßen Wirkstoffe richten sich nach der Art und dem Vorkommen der zu bekämpfenden Mikroorganismen, sowie nach der Zusammensetzung des zu schützenden Materials. Die optimale Einsatzmenge kann durch Testreihen ermittelt werden. Im allgemeinen liegen die Anwendungskonzentrationen im Bereich von 0,001 bis 5 Gew.-%, vorzugsweise von 0,05 bis 1,0 Gew.-%, bezogen auf das zu schützende Material.

Das erfindungsgemäße Materialschutzmittel enthält die N-sulfenylierten Benzolsulfonamide in einer Menge von etwa 1 bis 95 Gew.-%, bevorzugt 10 bis 90 Gew.-%.

Die erfindungsgemäßen Wirkstoffe können auch in Mischung mit anderen bekannten Wirkstoffen vorliegen. Beispielsweise seien die folgenden Wirkstoffe genannt: Benzylalkoholmono(poly)hemiformal und andere Formaldehyd abspaltende Verbindungen, Benzimidazolyl-methylcarbamate, Tetramethylthiuramdisulfid, Zinksalze von Dialkyldithiocarbamaten, 2,4,5,6-Tetrachlorisophthalonitril, Thiazolylbenzimidazol, Mercaptobenzthiazol, 2-Rhodanidomethylthio-benzthiazol, Organo-Zinnverbindungen, Methylenbisthiocyanat, Phenolderivate, wie 2-Phenylphenol, (2,2'-Dihydroxy-5,5'-dichlor)-diphenylmethan und 3-Methyl-4-chlor-phenol, andere N-Trihalogenmethylthio-Verbindungen, wie Folpet, Fluorfolpet und Dichlofluanid.

Obwohl die Verwendung einiger N-sulfenylierter Benzolsulfonamide aus der DE-AS 11 93 498 (siehe die entsprechenden Formeln des Beispiels 4) als Pflanzenschutzmittel mit fungizider Wirkung bekannt ist, ist es dennoch außerordentlich überraschend, daß die erfindungsgemäßen N-sulfenylierten Benzolsulfonamide der zuvor genannten Formel besonders wirksame Mikrobizide für Materialschutzmittel darstellen. Wie das nachfolgende Vergleichsbeispiel und die Vergleichstabelle (siehe hierzu den Beispielsteil) zeigen, besitzen die als Materialschutzmittel aus der DE-AS 12 38 139 bekannten, strukturanalogen N-sulfenylierten Sulfamide, wie das N,N-Dimethyl-N'- phenyl-N'-dichlorfluormethylthiosulfamid (Dichlofluanid) und das N,N-Dimethyl-N'-(4-tolyl)-N'-dichlorfluormethylthiosulfamid, wesentlich bessere fungizide Eigenschaften im Pflanzenschutz (Phytophthora-Test [Tomate] als die erfindungsgemäßen N-sulfenylierten Benzolsulfonamide. Aufgrund der schlechteren fungiziden Eigenschaften im Pflanzenschutz wäre daher zu erwarten gewesen, daß die erfindungsgemäßen N-sulfenylierten Benzolsulfonamide auch im Materialschutz schlechtere antimikrobielle Eigenschaften aufweisen würden als die aus der DE-AS 12 38 139 bekannten und im Materialschutz verwendeten Sulfamide.

I. Herstellungsbeispiele

Beispiel 1

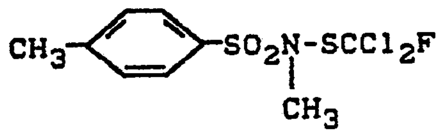

18,5 g (0,1 mol) 4-Toluolsulfonsäure-N-methylamid werden in 100 ml Toluol unter Zusatz von 16,9 g (0,1 mol) Dichlorfluormethansulfenylchlorid gelöst und bei Raumtemperatur mit der Lösung von 11,2 g (0,11 mol) Triethylamin in 20 ml Toluol versetzt. Hierbei steigt die Temperatur bis etwa 50°C an. Man setzt Wasser zu, trennt die Schichten und engt die Toluollösung nach dem Trocknen im Vakuum ein. Der Rückstand (27 g; $n_D^{20}$ 1,5519, Ausbeute 21 g = 66 % d.Th., Fp.: 42-43°C) ist das N-Fluordichlormethylthio-N-methylamid der 4-Toluolsulfonsäure.

In analoger Weise erhält man

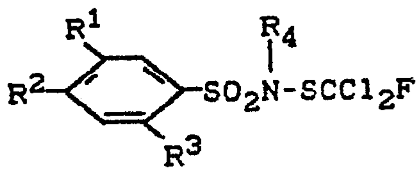

| Beisp. | $R^1$ | $R^2$ | $R^3$ | $R^4$ | Fp. ($n_D^{20}$; Kp.) |
|---|---|---|---|---|---|
| 2 | H | H | H | $C_2H_5$ | (133-40°/0,2) |
| 3 | H | H | H | $C_4H_9$-n | (140-45°/0,1) |
| 4 | H | $CH_3$ | H | $C_2H_5$ | (153-58°/0,2) |
| 5 | H | $CH_3$ | H | $C_4H_9$ | (168-69°/0,15) |
| 6 | H | Cl | H | $C_2H_5$ | (170-75°/0,2) |
| 7 | H | Cl | H | $C_4H_9$ | (170-75°/0,15) |
| 8 | $NO_2$ | $CH_3$ | H | $CH_3$ | 69-70° |
| 9 | $NO_2$ | $CH_3$ | H | $C_4H_9$ | 56-58° |
| 10 | $NO_2$ | H | $CH_3$ | $C_4H_9$ | 86-88° |
| 11 | H | H | $NO_2$ | $C_4H_9$ | 76-78° |
| 12 | $NO_2$ | H | H | $C_4H_9$ | 62° |
| 13 | $NO_2$ | Cl | H | $C_4H_9$ | 74-75° |
| 14 | H | $NO_2$ | H | $CH_3$ | 107-108° |
| 15 | H | $NO_2$ | H | $C_4H_9$ | (1,5574) |
| 16 | $NO_2$ | H | Cl | $C_4H_9$ | 57-58° |
| 17 | $CH_3$ | $CH_3$ | H | $CH_3$ | Cl Ber. 21,4<br>Gef. 21,4 |

| Beisp. | $R^1$ | $R^2$ | $R^3$ | $R^4$ | Fp. ($n_D^{20}$; Kp.) |
|---|---|---|---|---|---|
| 18 | $CH_3$ | $CH_3$ | H | $C_3H_7$-iso | 78-80° |
| 19 | $CH_3$ | H | $CH_3$ | $CH_3$ | 79° |
| 20 | H | $CH_3$ | H | $C_6H_{11}$ | 89-90° |
| 21 | H | $CH_3$ | H | $C_3H_5$ | (1,5536) |
| 22 | H | $CH_3$ | H | $CH_2CH_2CH_2OCH_3$ | (1,5396) |
| 23 | H | $CH_3$ | H | $C_5H_9$ | (1,5683) |
| 24 | H | H | H | $CH_3$ | (140-45°/0,12) |
| 25 | Cl | Cl | H | $CH_3$ | 68-69° |
| 26 | $NO_2$ | Cl | H | $CH_3$ | 94-95° |
| 27 | $NO_2$ | H | H | $CH_3$ | 69-70° |
| 28 | Cl | H | Cl | $CH_3$ | 89-92° |
| 29 | H | Cl | H | $C_4H_9$ | (170-75°/0,15) |

N-Dichlorfluormethylsulfenyl-N-iodpropargyl-benzolsulfonamide

0,1 mol eines N-Iodpropargyl-benzolsulfonamids werden in THF gelöst, 18,6 g (0,11 mol) Dichlorfluormethansulfensäurechlorid werden zugegeben und die Lösung wird auf 0°C abgekühlt. Bei dieser Temperatur werden 11 g (0,11 mol) Triethylamin langsam zugetropft. Es wird langsam auf Raumtemperatur kommen gelassen, dann 1 Stunde auf 60°C erwärmt. Das Lösungsmittel wird im Vakuum abgezogen, der Rückstand in Methylenchlorid aufgenommen und die organische Phase mit Wasser gewaschen. Nach Trocknen über Natriumsulfat wird das Lösungsmittel abgezogen und der verbleibende Rückstand in Cyclohexan aufgenommen. Es wird von nicht gelöstem Ausgangsprodukt abgetrennt und einrotiert. Die zunächst verbleibenden Öle kristallisieren im Kühlschrank.

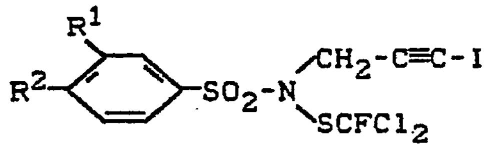

| Beispiel | $R^1$ | $R^2$ | F (°C) |
|---|---|---|---|
| 30 | H | H | 82-84 |
| 31 | H | $CH_3$ | 106-108 |
| 32 | H | Cl | 99-101 |
| 33 | Cl | Cl | 81-83 |

Anwendungsbeispiele

Beispiel 34

Zum Nachweis der Wirksamkeit gegen Pilze werden die minimalen Hemm-Konzentrationen (MHK) von erfindungsgemäßen Wirkstoffen bestimmt:

Ein Agar, der aus Bierwürze und Pepton hergestellt wird, wird mit erfindungsgemäßen Wirkstofen in Konzentrationen von 0,1 mg/l bis 5000 mg/l versetzt. Nach Erstarren des Agars erfolgt Kontamination mit Reinkulturen der in der Tabelle aufgeführten Testorganismen. Nach 2-wöchiger Lagerung bei 28°C und 60 bis 70 % rel. Luftfeuchtigkeit wird die MHK bestimmt. MHK ist die niedrigste Konzentration an Wirkstoff, bei der keinerlei Bewuchs durch die verwendete Mikrobenart erfolgt, sie ist in der nachstehenden Tabelle angegeben.

Tabelle 1: MHK's in mg/l bei der Einwirkung erfindungsgemäßer Substanzen auf Pilze

| Testorganismen | Vergleichssubstanz | | Substanz | | | | | | | | | | | | | | | |
|---|---|---|---|---|---|---|---|---|---|---|---|---|---|---|---|---|---|---|
| | A* | B** | 1 | 2 | 4 | 6 | 8 | 14 | 17 | 19 | 21 | 22 | 20 | 24 | 28 | 25 | 27 | 26 |
| Alternaria tenuis | 10 | 10 | 20 | | 10 | 20 | 5 | 35 | | 100 | | | | | | | | |
| Aspergillus niger | 200 | 50 | 10 | 10 | 10 | 10 | 20 | 20 | 10 | 10 | 35 | 20 | 350 | 5 | 20 | 20 | 20 | 50 |
| Aureobasidium pullulans | 50 | 7,5 | 5 | | 3,5 | 10 | 5 | 5 | | 35 | | | | | | | | |
| Chaetomium globosum | 100 | 50 | 3,5 | <2 | 7,5 | 35 | 15 | 20 | 3,5 | <2 | 5 | 5 | 10 | 3,5 | 35 | 7,5 | 20 | 20 |
| Coniophora puteana | 2 | 7,5 | 0,5 | | 0,3 | 0,75 | 0,75 | 3,5 | | 7,5 | | | | | | | | |
| Lentinus tigrinus | 2 | 10 | 5 | | 0,5 | 0,5 | 5 | 5 | | 100 | | | | | | | | |
| Penicillium glaucum | 35 | 50 | 10 | 10 | 20 | 10 | 20 | 20 | 10 | 20 | 20 | 35 | 20 | 5 | 15 | 10 | 20 | 20 |
| Polyporus versicolor | 50 | 20 | 2 | | 0,5 | 1 | 7,5 | 10 | | 100 | | | | | | | | |
| Sclerophoma pityophila | 10 | 15 | 5 | | 3,5 | 7,5 | 5 | 3,5 | | 10 | | | | | | | | |

* = Fluorfolpet
** = Dichlofluanid

Beispiel 35 (Wirkung gegen Schleimorganismen)

Erfindungsgemäße Substanzen werden in Konzentrationen von jeweils 0,1 bis 100 mg/l in Allens Nährlösung (Arch. Mikrobiol. 17, 34 bis 53 (1952)), die in 4 l sterilem Wasser, 0,2 g Ammoniumchlorid, 4,0 g Natriumnitrat, 1,0 g Dikaliumhydrogenphosphat, 0,2 g Calciumchlorid, 2,05 g Magnesiumsulfat, 0,02 g Eisenchlorid und 1 % Caprolactam enthält, in wenig Aceton gelöst, zur Anwendung gebracht. Kurz vorher wird die Nährlösung mit Schleimorganismen (ca. $10^6$ Keime/ml), die aus bei der Polyamid-Herstellung verwendeten Spinnwasser-Kreisläufen isoliert wurden, infiziert. Nährlösungen, die die minimale Hemmkonzentration (MHK) oder größere Wirkstofkonzentrationen aufweisen, sind nach 3-wöchiger Kultur bei Raumtemperatur noch völlig klar, d.h. die in wirkstoffreien Nährlösungen nach 3 bis 4 Tagen bemerkbare starke Vermehrung de Mikroben und Schleimbildung unterbleibt.

Tabelle 2

MHK-Werte in mg/1 bei der Einwirkung der unten angegebenen Substanzen auf Schleimorganismen

| Wirkstoff gemäß Beispiel | MHK in mg/l |
|---|---|
| 1 | $\lesssim 2$ |
| 2 | ~2 |
| 3 | 2 - <5 |
| 4 | 2 - <5 |
| 6 | 1 - <2 |
| 8 | 1 - <2 |
| 12 | 2 - <5 |
| 14 | >2 - <5 |

Beispiel 36

Bestimmung der toxischen Grenzwerte (kg/m³ Holz) erfindungsgemäßer Wirkstoffe für Coniophora puteana bzw. Polyporus versicolor auf Kiefern- bzw. Buchenholz

Die Bestimmung der toxischen Grenzwerte erfolgt in Anlehnung an die von H.P. Sutter, Int. Biodeterioration Bulletin 14 (3), 1978, Seiten 95 bis 99, beschriebene Methode.

Für die Teste werden jeweils frisch geschnittene, dünne Stirnholzstücke (Größe 40 x 40 mm, Dicke etwa 2 mm) im Vakuum mit Lösungen unterschiedlicher Wirkstoffkonzentration getränkt. Mit einer Wirkstoffkonzentration werden jeweils gleichzeitig 15 Holzproben getränkt. Davon werden jeweils 5 gleichzeitig für einen mykologischen Test verwendet.

Die Menge des absorbierten Wirkstoffes wird aus der Lösungsmittelretention (die durch Wiegen des Holzstückchens vor und nach der Imprägnierung bestimmt wird), der Holzdichte und der Konzentration des Wirkstoffes in der zurückbleibenden Imprägnierlösung bestimmt.

Vor dem mykologischen Test werden die Prüflinge mit Propylenoxid sterilisiert und je 1 Prüfling in einer Petrischale in Kontakt mit dem voll entwickelten Mycel des Testpilzes auf Malzextraktagar gebracht. Nach 6 Wochen bei 21 bis 23°C werden visuell die Toxizitätsgrenzen festgestellt.

In der folgenden Tabelle sind die Toxizitätsgrenzen (kg/cm³ Holz) für erfindungsgemäße Substanzen angegeben; die Toxizitätsgrenzen zeigen die Konzentrationen an, bei denen das Holz noch angegriffen und bei denen das Holz nicht mehr angegriffen wird.

Tabelle 3

| Toxizitätsgrenzen ($kg/m^3$ Holz) erfindungsgemäßer Wirktoffe für holzzerstörende Pilze | | |
|---|---|---|
| Wirkstoff gem. Beispiel | Coniophora puteana auf Kiefernholz | Polyporus versicolor auf Buchenholz |
| Vergleichssubstanz* | 1,61–2,25 | 2,23–2,81 |
| 1 | 0,22–0,65 | 2,2–2,9 |
| 2 | 0,24–0,74 | 1,4–2,4 |
| 3 | 0,25–0,76 | 0,63–1,29 |
| 4 | 0,65–1,3 | 2,8–3,7 |
| 6 | 0,24 | <0,22 |
| 14 | 0,26–0,79 | 2,2–3,07 |
| 19 | 0,24–0,72 | 1,07–1,76 |

* Dichlofluanid

## Patentansprüche

1. Materialschutzmittel, enthaltend N-sulfenylierte Benzolsulfonamide der Formel

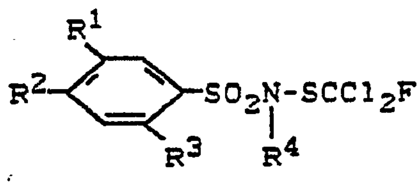

worin
$R^1$, $R^2$ und $R^3$ unabhängig voneinander für Wasserstoff, Halogen, Nitro, Alkyl oder Halogenalkyl stehen und
$R^4$ einen gegebenenfalls substituierten gesättigten oder ungesättigten aliphatischen oder cycloaliphatischen Rest bedeutet, wobei die aliphatischen Reste gegebenenfalls durch Heteroatome ein- oder mehrmals unterbrochen sein können.

2. Verwendung von N-sulfenylierten Benzolsulfonamiden der Formel

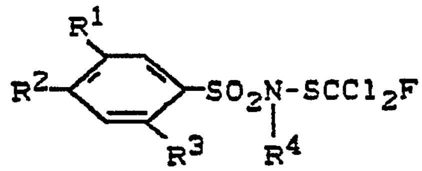

worin
$R^1$, $R^2$ und $R^3$ unabhängig voneinander für Wasserstoff, Halogen, Nitro, Alkyl oder Halogenalkyl stehen und
$R^4$ einen gegebenenfalls substituierten gesättigten oder ungesättigten aliphatischen oder cycloaliphatischen Rest bedeutet, wobei die aliphatischen Reste gegebenenfalls durch Heteroatome ein- oder mehrmals unterbrochen sein können,
zum Schutz von technischen Materialien.

3. Verwendung von N-sulfenylierten Benzolsulfonamiden der Formel

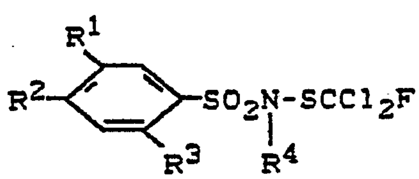

worin

$R^1$, $R^2$ und $R^3$ unabhängig voneinander für Wasserstoff, Halogen, Nitro, Alkyl oder Halogenalkyl stehen und
$R^4$ einen gegebenenfalls substituierten gesättigten oder ungesättigten aliphatischen oder cycloaliphatischen Rest bedeutet, wobei die aliphatischen Reste gegebenenfalls durch Heteroatome ein- oder mehrmals unterbrochen sein können,
zum Schutz von Holz und Anstrichmitteln.

4. Materialschutzmittel nach Anspruch 1, enthaltend die N-sulfenylierten Benzolsulfonamide in einer Menge von 1 bis 95 Gew.-%.

5. Verwendung nach Ansprüchen 2 und 3, dadurch gekennzeichnet, daß 0,001 bis 5 Gew.-% an N-sulfenylierten Benzolsulfonamiden, bezogen auf das zu schützende technische Material eingesetzt werden.

**Claims**

1. Agent, for the protection of materials, containing N-sulphenylated benzenesulphonamides of the formula

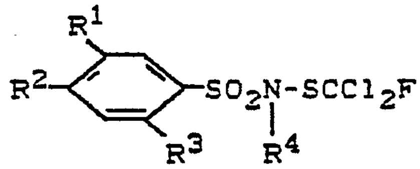

wherein $R^1$, $R^2$ and $R^3$ independently of one another represent hydrogen, halogen, nitro, alkyl or halogenoalkyl and
$R^4$ denotes an optionally substituted, saturated or unsaturated, aliphatic or cycloaliphatic radical, it being possible for the aliphatic radicals to be optionally interrupted one or more times by hetero-atoms.

2. Use of N-sulphenylated benzenesulphonamides of the formula

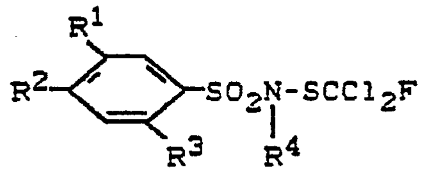

wherein $R^1$, $R^2$ and $R^3$ independently of one another represent hydrogen, halogen, nitro, alkyl or halogenoalkyl and
$R^4$ denotes an optionally substituted, saturated or unsaturated, aliphatic or cycloaliphatic radical, it being possible for the aliphatic radicals to be optionally interrupted one or more times by hetero-atoms, for protecting industrial materials.

3. Use of N-sulphenylated benzenesulphonamides of the formula

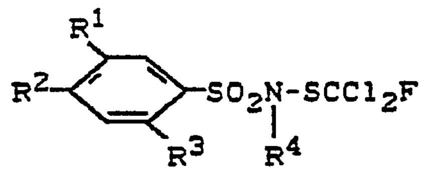

wherein $R^1$, $R^2$ and $R^3$ independently of one another represent hydrogen, halogen, nitro, alkyl or halogenoalkyl and
$R^4$ denotes an optionally substituted, saturated or unsaturated, aliphatic or cycloaliphatic radical, it being possible for the aliphatic radicals to be optionally interrupted one or more times by hetero-atoms, for protecting timber and paints.

4. Agent, for the protection of materials, according to Claim 1, containing the N-sulphenylated benzenesulphonamides in an amount of 1 to 95% by weight.

5. Use according to Claims 2 and 3, characterized in that 0.001 to 5% by weight of N-sulphenylated benzenesulphonamides are employed, relative to the industrial material to be protected.

**Revendications**

1. Agent de protection pour matériaux contenant des benzènesulfonamides N-sulfénylés de formule

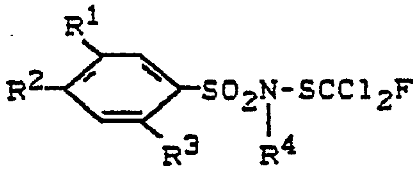

dans laquelle $R^1$, $R^2$ et $R^3$ représentent, indépendamment les uns des autres, l'hydrogène, un halogène, un nitro, un alkyle ou un halogénalkyle et
$R^4$ représente un reste aliphatique ou cycloaliphatique saturé ou insaturé éventuellement substitué, les restes aliphatiques pouvant éventuellement être une ou plusieurs fois interrompus par des hétéroatomes.

2. Utilisation de benzènesulfonamides N-sulfénylés de formule

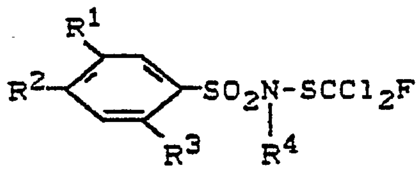

dans laquelle $R^1$, $R^2$ et $R^3$ représentent, indépendamment les uns des autres, l'hydrogène, un halogène, un nitro, un alkyle ou un halogénalkyle et
$R^4$ représente un reste aliphatique ou cycloaliphatique saturé ou insaturé éventuellement substitué, les restes aliphatiques pouvant éventuellement être une ou plusieurs fois interrompus par des hétéroatomes, pour la protection de matériaux techniques.

3. Utilisation de benzènesulfonamides N-sulfénylés de formule

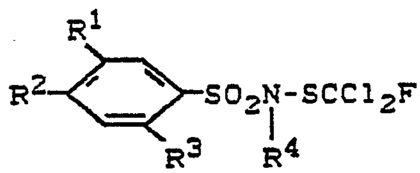

dans laquelle $R^1$, $R^2$ et $R^3$ représentent, indépendamment les uns des autres, l'hydrogène, un halogène, un nitro, un alkyle ou un halogénalkyle et
$R^4$ représente un reste aliphatique ou cycloaliphatique saturé ou insaturé éventuellement substitué, les restes aliphatiques pouvant éventuellement être une ou plusieurs fois interrompus par des hétéroatomes, pour la protection du bois et d'agents de peinture ou d'enduction.

4. Agent de protection pour matériaux selon la revendication 1, contenant les benzènesulfonamides N-sulfénylés dans une quantité de 1 à 95% en poids.

5. Utilisation selon les revendications 2 et 3, caractérisée en ce qu'on utilise 0,001 à 5% en poids de benzènesulfonamides N-sulfénylés par rapport au matériau technique à protéger.